(19) Europäisches Patentamt
European Patent Office
Office européen des brevets

(11) Veröffentlichungsnummer: **0 238 948 A2**

# (12) EUROPÄISCHE PATENTANMELDUNG

(21) Anmeldenummer: **87103648.9**

(22) Anmeldetag: **13.03.87**

(51) Int. Cl.⁴: **C 08 G 73/02**, D 06 P 1/52, D 06 P 5/08, D 21 H 3/48, D 06 M 15/61

(30) Priorität: **25.03.86 DE 3609985**

(43) Veröffentlichungstag der Anmeldung: **30.09.87 Patentblatt 87/40**

(84) Benannte Vertragsstaaten: **CH DE FR GB IT LI**

(71) Anmelder: **BAYER AG, Konzernverwaltung RP Patentabteilung, D-5090 Leverkusen 1 Bayerwerk (DE)**

(72) Erfinder: **Bachem, Henning, Dr., Wolfskaul 10, D-5000 Köln 80 (DE)**
Erfinder: **Schröer, Wolf-Dieter, Dr., Chistian-Hess-Strasse 65, D-5090 Leverkusen (DE)**

## (54) Basische Polykondensate.

(57) Basische Polykondensate, die durch Umsetzung von
A. einem Reaktionsprodukt aus
1. einem Dihalogenkohlenwasserstoff und/oder einem Dihalogenalkylether
und
2. einem Polyamin, das zwei endständige primäre und/oder sekundäre und zumindest eine innenständige tertiäre Aminogruppe enthält, wobei die Aminogruppen auch Teil eines Ringes sein können
im Molverhältnis von 0.7:1 bis 1.8:1
mit
B. einem Epihalogenhydrin oder 1,3-Dihalogenpropanol (2)
in einem Molverhältnis von 0,2 bis 5,0 Mol B pro Mol Basenstickstoff in A,
erhältlich sind,
finden Verwendung zur Behandlung von Hydroxyl- oder Amidgruppen enthaltenden Fasermaterialien vor oder nach dem Färben oder Bedrucken und als Hilfsmittel bei der Papierherstellung.

EP 0 238 948 A2

0238948

BAYER AKTIENGESELLSCHAFT 5090 Leverkusen, Bayerwerk
Konzernverwaltung RP
Patentabteilung Mi/bo/c

# Basische Polykondensate

Die Erfindung betrifft basische Polykondensate, die durch Umsetzung von

A. einem Reaktionsprodukt aus

1. einem Dihalogenkohlenwasserstoff und/oder einem Dihalogenalkylether

und

2. einem Polyamin, das zwei endständige primäre und/oder sekundäre und zumindest eine innenständige tertiäre Aminogruppe enthält, wobei die Aminogruppen auch Teil eines Ringes sein können,

im Molverhältnis von 0.7:1 bis 1.8:1

mit

B. einem Epihalogenhydrin oder 1,3-Dihalogenpropanol-(2)

in einem Molverhältnis von 0,2 bis 5,0 Mol B pro Mol Basenstickstoff in A,

erhältlich sind,

ihre Herstellung und ihre Verwendung zur Behandlung von Hydroxyl- oder Amidgruppen enthaltenden Fasermaterialien vor oder nach dem Färben oder Bedrucken und als Hilfsmittel bei der Papierherstellung.

In der deutschen Offenlegungsschrift 27 47 358 werden wasserlösliche, kationische Polykondensate aus sekundäre und/oder tertiäre Aminogruppen enthaltenden Polyaminen, Polyamiden, Polyurethanen und/oder Polyharnstoffen und bifunktionellen Verbindungen, wie α,ω-Alkyldihalogeniden, Epihalogenhydrinen oder ω-Halogencarbonsäurehalogeniden und ihre Verwendung zur Nachbehandlung von Reaktivfärbungen auf Cellulose-Materialien beschrieben.

In der europäischen Patentanmeldung EP 0 002 474 werden wasserlösliche Polykondensate beschrieben, die durch Umsetzung von Polyamidaminen oder Polyalkylenpolyaminen mit Dihalogenalkanen, Epichlorhydrin oder Bis-epoxy-Verbindungen hergestellt werden. Sie verbessern die Retention von Füllstoffen, Fasern und Pigmenten, sowie die Entwässerungsbeschleunigung bei der Papierherstellung.

Die französische Patentschrift 1 543 136 beschreibt die Umsetzung von Polyamidaminen mit α,ω-Dihalogen- oder Polyhalogenverbindungen und Weiterkondensation mit Epichlorhydrin zur Verbesserung der Naß- und Trockenverfestigung von Papier.

In der deutschen Patentschrift 2 364 444, der US-Patentschrift 4 129 528 und der britischen Patentschrift 1 096 964 werden kationische Harzzubereitungen zur Erhöhung der Naßfestigkeit von Cellulosesubstraten oder als Flockungsmittel beschrieben, die durch Umsetzung eines Dihalogenalkans und eines Polyalkylenpolyamins mit primären und sekundären Aminogruppen und Weiterkondensation mit Epichlorhydrin zugänglich sind.

Aus der deutschen Offenlegungsschrift 34 46 282 sind Nachbehandlungsmittel für gefärbte Baumwollfasern bekannt, die aus niedermolekularen Polyalkylenpolyaminen durch Umsetzung mit Epichlorhydrin hergestellt werden.

Bevorzugte basische Polykondensate sind erhältlich durch Umsetzung von

A. einem Reaktionsprodukt aus

1. einem Dihalogenkohlenwasserstoff der Formel

$$\begin{array}{c} X\text{-}M\text{-}X \\ | \\ R \end{array} \qquad (I)$$

worin

X Halogen,

R Wasserstoff oder einen gegebenenfalls durch Hydroxy substituierten $C_1$-$C_4$-Alkylrest und

M $C_2$-$C_6$-Alkylen, $C_4$-$C_6$-Alkenylen, Cyclohexylen oder Xylylen

bedeuten,

und/oder

einem Dihalogenalkylether der Formel

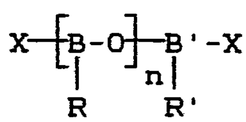

(II)

worin

X Halogen,

R und R' unabhängig voneinander Wasserstoff, Hydroxy oder einen gegebenenfalls durch Hydroxy substituierten $C_1$-$C_4$-Alkylrest,

B und B' unabhängig voneinander einen $C_2$- bis $C_6$-Alkylenrest und

n    1 oder 2

bedeuten,

und

2. einem Amin der Formeln

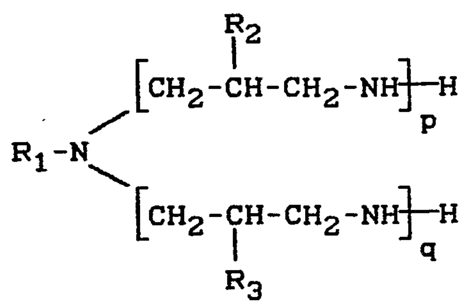

(IIIa)

und/oder

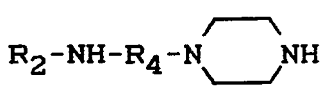

(IIIb)

worin

$R_1$ für einen gegebenenfalls durch Hydroxy oder Amino substituierten $C_1$ bis $C_{18}$-Alkylrest,

$R_2$ und $R_3$ unabhängig voneinander für Wasserstoff oder Methyl,

$R_4$ für $C_2$-$C_4$-Alkylen und

p und q für eine ganze Zahl von 1 bis 5 stehen,

im Molverhältnis von 0.7:1 bis 1.8:1, bevorzugt 0.9:1 bis 1.5:1,

mit

B) einem Epihalogenhydrin oder 1,3-Dichlorpropanol-(2)

in einem Molverhältnis von 0,2 Mol bis 5,0 Mol, bevorzugt 1,0 Mol bis 3,0 Mol, B pro Mol Basenstickstoff in A.

Die erfindungsgemäßen basischen Polykondensate sind wasserlöslich und bevorzugt nicht gelartig. Ihre wäßrigen Lösungen weisen bei einem Feststoffgehalt von 5 bis 50 Gew.-%, vorzugsweise 10 bis 30 Gew.-%, eine Viskosität von 10 bis 600 mPas, vorzugsweise 20 bis 300 mPas auf.

Die Herstellung der basischen Polykondensate erfolgt bevorzugt in wäßrigem Medium. Die Ausgangskomponenten 1. und 2. werden nach bekannten Verfahren bei pH-Werten über 6 und Temperaturen zwischen 20 und 150$^0$C, bei 0,5 bis 50 bar, vorzugsweise 1 bis 8 bar, zur Reaktion gebracht. Die Reaktion wird beendet, wenn eine Probe des Gemisches als 10 %ige, wäßrige Lösung bei 25$^0$C eine Viskosität von zumindest 15 mPas aufweist.

Dabei ist es häufig von Vorteil die Dihalogenverbindung portionsweise zuzusetzen, bis die gewünschte Viskosität erreicht ist. Ein Absinken des pH-Wertes unter 6 wird durch Zugabe einer Base, wie 10 n-NaOH oder Aminoethylpiperazin, verhindert. Der Feststoffgehalt der Vorprodukte A beträgt 10 bis 60 Gew.-%, vorzugsweise 20 bis 50 Gew.-%, und wird durch Verdünnen mit Lösungsmitteln eingestellt.

Allgemein sind die Vorprodukte A. durch ein Mindestmolekulargewicht von 1000 gekennzeichnet, wobei die obere Grenze durch die Bedingung der Löslichkeit, d.h. die Zahl der löslichmachenden Gruppen und das zugrundeliegende Polyamin bzw. die Dihalogenverbindung, festgelegt ist. Sie enthalten im wesentlichen lineare oder verzweigte Struktursegmente und gegebenenfalls je nach Polyamin und Dihalogenverbindung auch cyclische Einheiten, z.B. vom Piperazin-Typ, wenn als Komponente Aminoethylpiperazin verwendet wird.

Die weitere Umsetzung der Vorprodukte A. mit B. erfolgt nach an sich bekannten Methoden. So wird z.B. eine Verbindung B. auf ein Vorprodukt A. in der Weise zur Einwirkung gebracht, daß eine wäßrige, etwa 20 bis 50 %ige Lösung bzw. Emulsion der beiden Komponenten bei Temperaturen zwischen 25 und 95$^0$C, vorzugsweise 40 und 85$^0$C, so lange gerührt wird, bis eine Probe der Reaktionsmischung in Form einer 10 %igen, wäßrigen Lösung bei 25$^0$C eine Viskosität von 10 bis 600 mPas, vorzugsweise 20 bis 100 mPas, aufweist.

Falls die Viskosität bei der Kondensation zu stark ansteigt, wird das Reaktionsgemisch durch Zugabe eines

Lösungsmittels, vorzugsweise Wasser, verdünnt. Je nach Reaktionsbedingungen - Temperatur und Konzentration - wird die Kondensationsreaktion nach 30 Minuten bis 6 Stunden durch Zugabe einer anorganischen oder organischen Säure, wie Salzsäure, Schwefelsäure, Ameisensäure oder Essigsäure, bei pH-Werten von 2 bis 6, vorzugsweise 2 bis 5, beendet. Durch Verdünnen mit Wasser wird der Feststoffgehalt auf 10 bis 30 Gew.-% eingestellt. Die Umsetzungen werden bevorzugt in Wasser ausgeführt; es können ebenfalls andere polare Lösungsmittel, wie Ethylenglykol, Diethylenglykol, Triethylenglykol, Polyethylenglykol, Glycerin, Isopropanol, Ethanol, Methanol, Dimethylformamid, Dimethylsulfoxid, N-Methylpyrrolidon oder Gemische hiervon mit Wasser verwendet werden.

Auf diese Weise werden verkaufsfertige, lagerstabile, wäßrige Lösungen erhalten. Die Lösungen können, falls erwünscht, auch entwässert werden. Die erfindungsgemäßen Polykondensate enthalten noch reaktive Epoxy- bzw. Chlorhydrin-Gruppen. Dadurch sind sie in der Lage, eine chemische Reaktion mit dem Textilsubstrat oder Papier, zu deren Behandlung sie verwendet werden können, einzugehen.

Als Dihalogenkohlenwasserstoffe (I) seien genannt: 1,2-Dichlorethan, 1,2-Dibromethan, 1-Chlor-2-bromethan, 1,2-Dichlorpropan, 1-Chlor-3-brom-propan, 1,2-Dichlorbutan, 1,3-Dichlorpropan, 1,4-Dichlorbutan, 1,4-Dichlorbuten(2), 1,5-Dichlorpentan, 1,6-Dichlorhexan, 1,4-Cyclohexylendichlorid und 1,4-Xylylendichlorid.

Als Dihalogenalkylether (II) seien genannt: Bis-(β-chlor-ethyl)-ether, Bis-(β-chlor -isopropyl)-ether, Bis-(γ-chlor-propyl)-ether, Bis-(4-chlor-butyl)-ether,

Bis- (3-chlor-2-hydroxy-propyl)-ether und Ethylenglykol-bis-(β- chlor-ethyl)-ether.

Vertreter der Amine (IIIa) und (IIIb) sind:

Methyl-bis-(3-aminopropyl)-amin, Ethyl-bis-(3-aminopropyl)-amin, 2-Hydroxyethyl-bis-(3-aminopropyl)-amin, n-Butyl-bis-(3-aminopropyl)-amin und Aminoethylpiperazin.

Die bevorzugte Verbindung B. ist Epichlorhydrin.

Die erfindungsgemäßen basischen Polykondensate finden Verwendung zur Behandlung vor oder nach dem Färben oder Bedrucken von Hydroxyl- oder Amidgruppen enthaltenden Fasermaterialien, z.B. auf Basis von natürlichen Fasern wie Baumwolle oder Wolle, oder auf Basis von synthetischen oder halbsynthetischen Fäden oder Fasern wie Polyamide oder Celluloseester. Sie verbessern die Naßechtheiten, z.B. die Schweiß- und Waschechtheit, der Fasermaterialien.

Weiterhin eignen sich die neuen Polykondensate als Hilfsmittel bei der Papierherstellung. Sie verbessern die Fixierung von Pigmentteilchen auf farbigen Laminatpapieren und von Leimungsmitteln im Papier. Die Anwendung erfolgt in bekannter Weise, indem man z.B. die Polykondensate in verdünnter wäßriger Lösung der Papierrohstoffsuspension zusetzt. Die Menge an Polykondensaten liegt beispielsweise bei 0,005 bis 0,5 Gew.-%, bezogen auf das Trockengewicht des Papiers. Der bevorzugte pH-Wert liegt bei 4,0 bis 8,0.

Beispiel 1

Man legt 145,2 g Methyl-bis-(3-aminopropyl)-amin vor, fügt bei 80°C 87,5 g geschmolzenes p-Xylylendichlorid (105°C) in 10 Min. unter Rühren zu und rührt 2 Std. nach. Anschließend gibt man bei 80-85°C in 30 Min. 49,5 g 1,2-Dichlorethan zu und verdünnt das viskoser werdende Reaktionsgemisch mit 150 ml Wasser. Man rührt noch 1 1/4 Std. bei 75-80°C nach, verdünnt portionsweise mit Wasser, kühlt bei der gewünschten Endviskosität ab und entgast.

Feststoffgehalt: 22,5 Gew.-%
Viskosität: 154 mPas (25°C)

Beispiel 2

Man legt 697,4 g Methyl-bis-(3-aminopropyl)-amin und 1530 ml Wasser vor, gibt dann bei 120°C im Druckreaktor 475,0 g 1,2-Dichlorethan in 2 Stunden zu und rührt 90 Minuten weiter. Anschließend tropft man 2010 ml Wasser zu, belüftet und entgast.

Viskosität: 92 mPas (25°C)
Feststoffgehalt: 22,0 Gew.-%

Beispiel 3

Zu einer Vorlage von 697,4 g Methyl-bis-(3-aminopropyl)-amin und 1510 ml Wasser gibt man bei 120°C im Druckreaktor ein Gemisch aus 431,8 g 1,2-Dichlorethan und 133,2 g 1,2-Dichlorpropan in 3 Stunden und kondensiert noch 2 Stunden

bei dieser Temperatur weiter. Danach wird mit Wasser verdünnt, belüftet und entgast.

Viskosität: 110 mPas (25° C)
Feststoffgehalt: 22,5 Gew.-%

Beispiel 4

Zu einer Vorlage von 290,6 g Methyl-bis-(3-aminopropyl)-amin und 75 ml Wasser fügt man bei 80° C in 2 Stunden ein Gemisch aus 148,5 g 1,2-Dichlorethan und 46,5 g 1,6-Dichlorhexan. Danach rührt man 5 Stunden bei 90° C weiter und fügt portionsweise 420 ml Wasser zu.

Viskosität: 293 mPas (25° C)
Feststoffgehalt: 49,0 Gew.-%

Beispiel 5

Man legt 203,4 g Methyl-bis-(3-aminopropyl)-amin, 76,8 g Aminoethylpiperazin und 120 ml Wasser vor. Zu dem Gemisch tropft man in 90 Minuten bei 80° C 183,2 g 1,2-Dichlorethan und rührt 8 Stunden bei 90° C weiter. In dieser Zeit gibt man portionsweise 300 ml Wasser zu, kühlt dann ab, verdünnt mit Wasser auf 50 % und entgast.

Viskosität: 68 mPas (25° C)

Beispiel 6

Man legt 270,0 g des in Beispiel 2 beschriebenen Vorproduktes im Gemisch mit 249 ml Wasser vor und tropft bei

25 - 30° C in 45 Minuten 55,5 g (0,6 Mol) Epichlorhydrin zu. Danach rührt man 1 Stunde bei 30° C nach und erhitzt auf 70 - 80° C. Man rührt etwa 30 Minuten bei dieser Temperatur und stellt mittels einer Salzsäure-Lösung auf pH = 3 ein.

Viskosität: 86 mPas (25° C)
Feststoffgehalt: 19,0 Gew.-%

Beispiel 7

Zu einer Vorlage aus 205,0 g des in Beispiel 3 beschriebenen Reaktionsproduktes und 245 ml Wasser gibt man bei 25 - 30° C in 45 Minuten 27,8 g (0,3 Mol) an Epichlorhydrin. Nach einer Nachrührzeit von 1 Stunde erhitzt man auf 70 - 80° C und läßt das Gemisch viskoser werden. Bei Erreichen der gewünschten Viskosität stellt man den pH-Wert mit Hilfe einer Salzsäure-Lösung auf pH: 2 ein.

Viskosität: 68 mPas (25° C)
Feststoffgehalt: 15,1 Gew.-%

Beispiel 8

Wie in Beispiel 7 beschrieben, wird eine Vorlage aus 174,0 g des in Beispiel 4 beschriebenen Vorproduktes mit 300 ml Wasser verdünnt und mit 18,5 g (0,2 Mol) Epichlorhydrin zu einem polymeren Kondensat umgesetzt.

Viskosität: 107 mPas (25° C)
Feststoffgehalt: 20,9 Gew.-%

Beispiel 9

Wie in Beispiel 7 beschrieben, wird ein Gemisch von 121,7 g des Vorproduktes aus Beispiel 5 und 230 ml Wasser mit 37,0 g (0,4 Mol) Epichlorhydrin umgesetzt.

Viskosität: 103 mPas (25°C)
Feststoffgehalt: 24,8 Gew.-%

Beispiel 10

Eine gespülte 4 %ige Baumwoll-Ausziehfärbung, erhalten mit dem Farbstoff Direct Blue 98 (C.I. 23155), wird auf dem Foulard mit einer Lösung, die 5 g/l der polymeren Verbindung (100 %ige Ware) gemäß Beispiel 6 enthält, bei pH 7 in kalter Flotte (20°C) 20 Minuten imprägniert. Danach wird ohne Zwischentrocknung 3 Minuten bei 80°C fixiert.

Die Echtheitsprüfungen zeigen eine deutlich verbesserte Waschechtheit der nachbehandelten Ware in der 60°-Wäsche.

Beispiel 11

Eine gespülte 4 %ige Baumwoll-Ausziehfärbung, erhalten mit einem Farbstoff, wie in DE-AS 1 544 559 Beispiel 1 beschrieben, wird 20 Minuten bei pH 7 und 50°C bei einem Flottenverhältnis von 25:1 in einer wäßrigen Lösung, die 1,5 % (bezogen auf das Trockengewicht des Substrates) der polymeren Verbindung (100 %ige Ware) gemäß Beispiel 8 enthält, behandelt. Anschließend wird mit kaltem Wasser gespült und 5 Minuten bei 150°C fixiert.

Durch die Nachbehandlung wird das Echtheitsniveau der Färbung in der $40^0$-Wäsche, sowie die Schweißechtheit, deutlich verbessert.

0238948

Patentansprüche

1. Basische Polykondensate, die durch Umsetzung von

A. einem Reaktionsprodukt aus

1. einem Dihalogenkohlenwasserstoff und/oder einem Dihalogenalkylether

und

2. einem Polyamin, das zwei endständige primäre und/oder sekundäre und zumindest eine innenständige tertiäre Aminogruppe enthält, wobei die Aminogruppen auch Teil eines Ringes sein können,

im Molverhältnis von 0.7:1 bis 1.8:1

mit

B. einem Epihalogenhydrin oder 1,3-Dihalogenpropanol-(2)

in einem Molverhältnis von 0,2 bis 5,0 Mol B pro Mol Basenstickstoff in A,

erhältlich sind.

2. Basische Polykondensate nach Anspruch 1, die durch Umsetzung von

A. einem Reaktionsprodukt von

1. einem Dihalogenkohlenwasserstoff der Formel

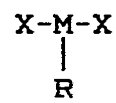

worin

X Halogen,

R Wasserstoff oder einen gegebenenfalls durch Hydroxy substituierten $C_1$-$C_4$-Alkylrest und

M $C_2$-$C_6$-Alkylen, $C_4$-$C_6$-Alkenylen, Cyclohexylen oder Xylylen

bedeuten,

und/oder

einem Dihalogenalkylether der Formel

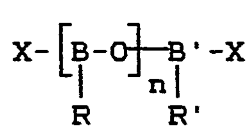

worin

X Halogen,

R und R' unabhängig voneinander Wasserstoff, Hydroxy oder einen gegebenenfalls durch Hydroxy substituierten $C_1$-$C_4$-Alkylrest,

B und B' unabhängig voneinander einen $C_2$- bis $C_6$-Alkylenrest und

n 1 oder 2

bedeuten,

und

2. einem Amin der Formeln

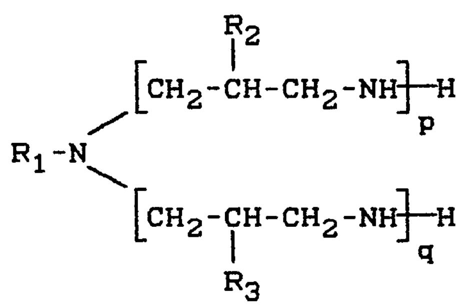

und/oder

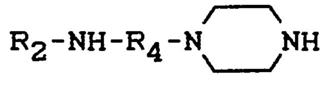

worin

$R_1$ für einen gegebenenfalls durch Hydroxy oder Amino substituierten $C_1$ bis $C_{18}$-Alkylrest,

$R_2$ und $R_3$ unabhängig voneinander für Wasserstoff oder Methyl,

$R_4$ für $C_2$-$C_4$-Alkylen und

p und q für eine ganze Zahl von 1 bis 5 stehen,

im Molverhältnis von 0.7:1 bis 1.8:1, bevorzugt 0.9:1 bis 1.5:1,

mit

B) einem Epihalogenhydrin oder 1,3-Dichlorpropanol-(2)

in einem Molverhältnis von 0,2 Mol bis 5,0 Mol, bevorzugt 1,0 Mol bis 3,0 Mol B, pro Mol Basenstickstoff in A,

erhältlich sind.

3. Basische Polykondensate nach Anspruch 1, deren 5 bis 50 gewichtsprozentige wäßrige Lösungen eine Viskosität von 10 bis 600 mPas aufweisen.

4. Basische Polykondensate nach Anspruch 1, bei deren Herstellung 1,2-Dichlorethan, 1,2-Dichlorpropan, 1-Chlor-3-brom-propan, 1,6-Dichlorhexan und/oder 1,4-Xylylendichlorid als Dihalogenkohlenwasserstoff verwendet werden.

5. Basische Polykondensate nach Anspruch 1, bei deren Herstellung Methyl-bis-(3-aminopropyl)-amin und/oder Aminoethyl-piperazin als Polyamin verwendet werden.

6. Basische Polykondensate nach Anspruch 1, bei deren Herstellung Epichlorhydrin als Epihalogenhydrin verwendet wird.

7. Verfahren zur Herstellung von basischen Polykondensaten, dadurch gekennzeichnet, daß man

A. ein Reaktionsprodukt von

1. einem Dihalogenkohlenwasserstoff und/oder einem Dihalogenalkylether

mit

2. einem Polyamin, das zwei endständige primäre und/oder sekundäre und zumindest eine innenständige tertiäre Aminogruppe enthält, wobei die Aminogruppen auch Teil eines Ringes sein können,

im Molverhältnis von 0.7:1 bis 1.8:1

0238948

mit

B. einem Epihalogenhydrin oder 1,3-Dihalogenpropanol-(2)

in einem Molverhältnis von 0,2 bis 5,0 Mol B pro Mol Basenstickstoff in A,

umsetzt.

8. Verfahren zur Behandlung von Hydroxyl- oder Amidgruppen enthaltenden Fasermaterialien vor oder nach dem Färben oder Bedrucken, dadurch gekennzeichnet, daß man basische Polykondensate des Anspruchs 1 verwendet.

9. Verfahren zur Behandlung von Papier, dadurch gekennzeichnet, daß man basische Polykondensate des Anspruchs 1 verwendet.